(19) **Europäisches Patentamt / European Patent Office / Office européen des brevets**

(11) **EP 1 741 725 B1**

(12) **EUROPEAN PATENT SPECIFICATION**

(45) Date of publication and mention
of the grant of the patent:
**09.04.2014 Bulletin 2014/15**

(51) Int Cl.:
**C08F 4/659** *(2006.01)* **C08F 110/06** *(2006.01)*
**C08F 4/6592** *(2006.01)* **C08F 10/06** *(2006.01)*

(21) Application number: **05014905.3**

(22) Date of filing: **08.07.2005**

(54) **Propylene polymer composition**

Polypropylen Zusammensetzung

Composition à base de polypropylène

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**10.01.2007 Bulletin 2007/02**

(73) Proprietor: **Borealis Technology Oy**
**06101 Porvoo (FI)**

(72) Inventors:
• **Ernst, Eberhard**
**4040 Linz (AT)**
• **Lehmus, Petri**
**00850 Helsinki (FI)**

• **Bartke, Michael**
**04400 Järvenpää (FI)**
• **Huhtanen, Lauri**
**07940 Loviisa (FI)**

(74) Representative: **Kador & Partner**
**Corneliusstrasse 15**
**80469 München (DE)**

(56) References cited:
**WO-A-03/051934    US-A- 5 573 840**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention is related to a new propylene polymer having a low amount of impurities as well as to the process of the same and its use.

Conventional polymers contaminated with impurities - although sometimes in rather low levels - make the polymer unsuitable for certain end applications such as capacitor films or for certain food or medical applications where a high purity is needed. The ash content of the polymer product is one of the indicators of the undesired impurities. The impurities include metallic and non-metallic impurities, which are often originating from the catalyst system used for the polymerization, particularly aluminum, titanium, silicon, halogen (such as Cl and F) and boron residues. This specific problem may arise especially in cases where supported metallocene catalysts are employed since due to the low activities of the same usually considerably high amounts of catalyst are needed. As a negative side effect, the polymer product is contaminated with high amount of residual catalyst components. To achieve very low levels of these residues, the polymer products are often washed after production.

Of course for high demanding applications not only the amount of impurities should be considered but also the mechanical properties as for example the stiffness of the product.

WO 02/16455 discloses a propylene homopolymer with a molecular weight distribution (MWD) of 1.7 to 5. The pentad content of this polymer is higher than 93 % and the xylene solubles (XS) is lower than 1 wt.-%. Moreover, the aluminum and chloride levels in this propylene homopolymer are lower than 25 ppm. The polymer is prepared by a two-stage process using metallocene catalyst supported on fluorinated silica in the presence of a highly fluorinated trisarylboron activator compound. The aluminum and chloride level in this propylene homopolymer is reduced i.a. due to the use of a boron-based cocatalyst, which in turn can provide boron residues to the polymer.

The object of the present invention is to provide further propylene polymers having a low amount of impurities making the product suitable for high demanding end applications as for example capacitor films, food packaging or medical packaging articles. Preferably propylene polymer is suitable for end applications requiring good mechanical properties as inter alia a high stiffness.

The finding of the present invention is that a propylene polymer can be produced which contains significantly reduced amounts of residues in the final propylene polymer enabling the use of the polymer in demanding end applications without that any washing step is needed. Also a method using a very feasible catalyst system for producing such polymer is provided.

Hence, the patent invention provides a propylene polymer which particularly comprises a low Al-content and advantageously low amounts of other residues mainly originating from the catalyst. Accordingly, the propylene polymer of the invention comprises an aluminum residue content of less than 25 ppm, more preferably less than 10 ppm, still more preferably less than 9 ppm and boron residue content of less than 25 ppm, more preferably less than 10 ppm, still more preferably less than 9 ppm.

Such a polymer with very low amounts of metallic or non-metallic residues arising from the catalyst component makes it suitable for high demanding applications, wherein the presence of such residues should be avoided, as for example for capacitor films or for food packaging or medical packaging articles.

In a very preferable embodiment the propylene polymer comprises the above low content of Al- and B-residues and additionally a reduced amount of silicon (Si) residues or chlorine (Cl) residues or a reduced amount of both silicon and chlorine residues. Preferably the silicon residues content in the propylene polymer is less than 10 ppm, more preferably less than 5 ppm. Depending on the desired end application, the polypropylene polymer may contain Si-residues even less than 1 ppm. The chlorine content in the propylene polymer is less than 10 ppm, more preferably less than 5 ppm. Depending on the desired end application the polymer propylene of the invention may contain even as low as 1 ppm of Cl-residues.

In a further embodiment the total amount of aluminum, boron and silicon residues is less than 10 ppm. In another embodiment the total amount of Al, B, Si and Cl is less than 15 ppm, more preferably less than 10 ppm.

The terms "aluminium (Al), boron (B), chlorine (Cl) or silicon (Si) content" or "Al-, B-, Cl- or Si-residue" used above and below mean any residues of Al, B, Cl and Si, in elementary or non-elementary form (e.g. ionic/non-ionic form, such as in a form of an oxide) that are mainly originating from the catalyst and can be recovered from the propylene polymer. These residues may be determined using the methods as defined later below under "Determination methods and definitions".

In a preferred embodiment the propylene polymer is avoid of any boron residues that originate from the catalyst system. The catalyst system includes one or more catalyst components selected from one or more catalytically active component and optionally one or more activators as the cocatalyst. The components can be combined, e.g. supported on a carrier material, before the catalyst system is subjected to a polymerization reactor or they can be added separately to the polymerization reactor.

The purity of the propylene polymer is further characterized by the amount of its volatiles. The volatiles are substances being driven off as vapor at room or slightly elevated temperatures, from a polymer. Hence, the volatiles content is lower than 400 ppm, preferably lower than 300 ppm, more preferred lower than 200 ppm. The volatiles content may be determined by the method described later below under "Determination methods and definitions".

Not only the amount of volatiles, but preferably also the amount of non-volatile residues may significantly be reduced in the propylene polymer of the invention. The ash content is the non-volatile inorganic matter of a composition which remains after subjecting it to a high decomposition temperature. The ash content may be determined by the method described later below under "Determination methods and definitions" It is in particular preferred that the ash content of the propylene polymer is less than 50 ppm, more preferably less than 40 ppm and most preferably less than 30 ppm.

In a preferable embodiment, especially for the above mentioned high demanding applications, the propylene polymer is a high crystalline propylene polymer. A high crystalline propylene polymer is characterized by a high stereoregularity, i.e. high isotacticity. Generally, a high isotactic propylene polymer is preferred as it has better mechanical properties, in particular an improved stiffness. Therefore, it is preferred that the propylene polymer has an isotacticity expressed in mmmm pentad concentration of at least 0.940, more preferably of at least 0.945 and still more preferably of at least 0.950, determined by NMR-spectroscopy (for the determination method see below under "Determination methods and definitions").

Xylene solubles a part of the polymer soluble in cold xylene determined by dissolution in boiling xylene and letting the insoluble part crystallize from the cooling solution (for the method see below "Determination methods and definitions"). The xylene solubles fraction contains polymer chains with low molecular weight and low stereo-regularity. Hence, as a preferable embodiment of the invention the propylene polymer having a high crystallinity has xylene solubles below 2.0 wt.-%, more preferably below 1.5 wt.-% and still more preferably below 1.0 wt.-%.

The molecular weight distribution (MWD) (also determined herein as polydispersity) is the relation between the numbers of molecules in a polymer and the individual chain length. The molecular weight distribution can be measured e.g. by gel permeation chromatography (GPC), whereby it is expressed as the ratio of weight average molecular weight ($M_w$) and number average molecular weight ($M_n$). Number average molecular weight ($M_n$) and weight average molecular weight ($M_w$) as well as the molecular weight distribution (MWD) are determined according to ISO 16014.

As a broad molecular weight distribution improves the processability of the propylene polymer, therefore, advantageously the polydispersity ($M_w/M_n$) is up to 20, preferably up to 10, more preferably up to 8. In an alternative embodiment the polydispersity ($M_w/M_n$) is between 1 to 8.

Moreover, the molecular weight of a polymer can be further expressed by way of its melt flow rate (MFR). The melt flow rate (MFR) mainly depends on the average molecular weight. An increase in molecular weight means a decrease in the MFR-value.

The melt flow rate MFR is measured in g/10 min of the polymer discharged under specific temperature and pressure conditions and is the measure of a viscosity of a polymer. Melt flow rate measured under a load of 2.16 kg (ISO 1133) is denoted as $MFR_2$.

It is preferred that the propylene polymer has an $MFR_2$ of up to 10 g/10 min, more preferably up to 6 g/10 min, still more preferably up to 4 g/10 min. A preferred range for the $MFR_2$ is 1 to 10 g/10 min.

The propylene polymer includes both homo- and copolymers of propylene. A homopolymer according to this invention has less than 0.2 wt.-%, more preferably less than 0.1 wt.-%, still more preferably less than 0.05 wt.-%, yet more preferably less than 0.005 wt.-%, other alpha-olefins than propylene in the polymer. Most preferred no other alpha-olefins are detectable.

In case the propylene polymer is a propylene copolymer, the copolymer is preferably a random propylene copolymer. The comonomers can be selected from the list consisting of ethylene, $C_4$-alpha-olefin, $C_5$-alpha-olefin, $C_6$-alpha-olefin, $C_7$-alpha-olefin, $C_8$-alpha-olefin, $C_9$-alpha-olefin, $C_{10}$-alpha-olefin, $C_{11}$-alpha-olefin and $C_{12}$-alpha-olefin. The alpha-olefins can be linear, branched, aliphatic cyclic or aromatic cyclic alpha-olefins. Preferably, the comonomer is ethylene. The amount of the comonomer is not limited and e.g. conventionally used amounts can be used deoending on the desired end application. In one embodiment the content of the comonomer in the propylene copolymer may be up to 2 wt.-%, preferably up to 1.5 wt.-%. In another embodiment lower amounts e.g. up to 0.8 wt.-%, preferably up to 0.5 wt.-% may be desired.

Preferably the propylene polymer is a homopolymer.

The invention further covers both unimodal and multimodal propylene polymers with respect to the molecular weight distribution (MWD).

A propylene polymer with a broad molecular weight distribution (MWD) may be unimodal (very broad single maxima) or multimodal, preferably bimodal, with respect to the weight average molecular weight distribution (MWD). "Multimodal" or "multimodal distribution" describes a frequency distribution that has several relative maxima. In particular, the expression "modality of a polymer" refers to the form of its molecular weight distribution (MWD) curve, i.e. the appearance of the graph of the polymer weight fraction as a function of its molecular weight.

The molecular weight distribution (MWD) of polymer produced in a single polymerization stage using a single monomer mixture, a single polymerization catalyst and a single set of process conditions (i.e. temperature, pressure, etc.) shows a single maximum the breadth of which depends on catalyst choice, reactor choice, process conditions, etc., i.e. such a polymer is unimodal.

As an alternative for a unimodal propylene, the invention covers also a propylene polymer which comprises at least the two components

(i) a propylene homopolymer or copolymer and
(ii) another propylene homopolymer or copolymer
which components (i) and (ii) are different with respect to the weight average molecular weight ($M_w$) and/or in the comonomer distribution.

If component (i) or component (ii) or both are copolymers, these are preferably random copolymers. Furthermore, the components (i) and (ii) may have the same or different comonomer contents. In case of different comonomer contents the propylene polymer has multimodality with respect to the comonomer distribution.

It is preferred that one of the components (i) and (ii) has a lower molecular weight and thus higher MFR than the other of components (i) and (ii), i.e. than the higher molecular weight component. Accordingly, as a further embodiment, at least a bimodal propylene polymer, preferably at least a bimodal homopropylene, is provided which comprises a lower molecular weight (LMW) component and a higher molecular weight (HMW) component. The weight ratios thereof may vary. The amount of component (i) may be 30 to 70 wt.-%, preferably 40 to 60 wt.-%, more preferably 45 to 55 wt.-% and the amount of component (ii) may be 30 to 70 wt.-%, preferably 40 to 60 wt.-%, more preferably 45 to 55 wt.-%, calculated from the total propylene polymer.

In a preferred embodiment, the propylene polymer as described above is a reactor-made propylene polymer (also called as a reactor powder). The reactor-made propylene polymer means herein the reaction product as obtained from the polymerization process, i.e. the reactor-made propylene polymer has not been subjected to any washing or treatment step to decrease or remove (1) the Al- and B-residues, preferably the Al-, B-, Cl- and Si-residues, which mainly originate from the catalyst. Also preferably, the reactor-made propylene polymer has not been subjected to (2) any deashing step in a manner known in the art to decrease or remove the ash content of the polymer. If desired, the reactor-made propylene polymer of this embodiment may then further be treated in a subsequent treatment step, e.g. washing step, in a known manner for optimizing, e.g. for further reducing one or more of the following: Al, B, Cl, Si and ash content of the product.

Moreover, it is in particular preferred that the propylene polymer is obtainable by a single site catalyst (SSC) polymerization. The propylene polymer is obtainable by a metallocene catalysed polymerization, more preferably using the process and/or catalyst as defined below.

In a further advantageous embodiment, the propylene polymer is obtainable by a solid, non-silica supported catalyst, preferably solid non-silica supported metallocene-based catalyst.

According to a further preferable embodiment of the invention, the propylene polymer as defined above is obtainable by a solid catalyst which (1) comprises at least a metallocene complex as a catalytically active component, optionally together with an activator as the cocatalyst and (2) has a productivity of at least 30 kg PP/g catalyst, typically of at least 40 kg PP/g catalyst, preferably of at least 50 kg/PP/g catalyst, more preferably of at least 60 kg PP/g catalyst. The productivity as defined above is a known expression in the field and describes the catalytic activity of the catalyst. The term "kg PP/g catalyst" means the amount of polypropylene produced with 1 g of the catalyst.

In addition, the present invention comprises also the use of the propylene polymer as described above as such or as a component of a polymer blend in various end use applications with high purity requirements. Accordingly, the invention further provides an article comprising the propylene polymer of the invention. Such articles include containers and packaging articles for medical, food and electrical applications (such as capacitor film applications).

Accordingly, the propylene polymer can be processed as such or as a blend with further polymer component(s), optionally in the presence with additives (such as well known in the art) to produce various end applications in a known manner. E.g. the propylene polymer can be moulded or extruded to articles, e.g. for films, mono- and biaxially oriented films, fibers and molded articles. Such extruded or molded articles include mono- and multilayered articles as known in the art. Furthermore, films include cast and blown films. Due to the high purity the inventive propylene polymer is very feasible in the field of food packaging and medical packaging, as well as in electrical applications.

Moreover the present invention is directed to a layered structure, preferably a film, which comprises at least one layer comprising the propylene polymer as defined above. Preferably the layers of the film consist essentially of the propylene polymer as defined above. In addition, the film comprising the inventive propylene polymer may be a bi-oriented film and/or a capacitor film.

The articles including films can be produced according to or analogously to methods well known in the art.

Moreover, the present invention provides also a polymerization process for producing the propylene polymer.

The process for preparing the inventive propylene polymer comprises at least the step of polymerizing propylene in the presence of a catalyst, preferably non-silica supported catalyst. "Non-silica supported catalyst" means herein that part or all of the active catalyst components have not been supported on a solid, porous silica-based carrier material as is the case in a silica-supported catalyst, wherein the catalyst component(s) are conventionally impregnated to the pores of silica carrier particles.

In principal any polymerization method including slurry and gas phase polymerization can be used for producing the polymer composition. Slurry polymerization is preferably a bulk polymerization. "Bulk" means a polymerization in a reaction medium comprising at least 60 wt.-% monomer.

The invention also provides a process for producing the propylene polymer comprising at least a propylene homo- or copolymer component (i) as defined above, wherein the propylene, optionally together with one or more comonomers, are polymerized in the presence of a polymerization catalyst. In case the propylene polymer consists of component (i) only the process is a single stage process.

In case a multimodal, e.g. at least bimodal, polymer comprising at least two different components (i) and (ii) with different molecular weight distribution (MWD) and/or with different comonomer contents, the propylene polymer may be produced by blending each or part of the components in-situ during the polymerization process thereof (in-situ process) or, alternatively, by blending mechanically two or more separately produced components in a manner known in the art.

It is also possible to produce a multimodal propylene polymer in one reactor by selecting e.g. one or more of (1) changing polymerization conditions, (2) using at least two different catalysts, (3) using multi site, e.g. dual site catalysts and (4) using at least two different comonomer feeds.

Alternatively, the invention further provides a process for producing a propylene polymer comprising at least two different propylene homo- or copolymer components (i) and (ii) as defined above, wherein each component (i) and (ii) is produced by polymerizing propylene, optionally together with one or more comonomers, in the presence of a polymerization catalyst in a multistage polymerization process using one or more polymerization reactors, which may be the same or different, e.g. at least loop-loop, gas-gas or any combination of loop and gas reactors. Each stage may be effected in parallel or sequentially using the same or different polymerization method(s). In case of a sequential stages each components, e.g. (i) and (ii), may be produced in any order by carrying out the polymerization in each step, except the first step, in the presence of the polymer component formed, in the preceding step. Preferably, the catalyst used and added in the first step is present in the subsequent step(s). Alternatively, the same or different catalyst can be added in the subsequent step(s).

Multistage processes include also bulk/gas phase reactors known as multizone gas phase reactors for producing multimodal propylene polymer.

Thus a further embodiment provides a process for producing any of the above polymer composition, which comprises (i) a propylene homo- or copolymer component and, optionally, (ii) an propylene homo- or copolymer component, wherein the process includes a step of:

(a) polymerizing in a slurry reactor, preferably a loop reactor, propylene, optionally together with one of more comonomers, in the presence of a polymerization catalyst to produce a first propylene polymer component (one of components (i) and (ii)), and,
optionally, transferring the reaction product of step (a) to a subsequent gas phase reactor and

(b) polymerizing in a gas phase reactor propylene, optionally together with one or more comonomers, in the presence of the reaction product of step (a) to produce a second polymer component (the other of components (i) and (ii)) for obtaining the propylene polymer, and
recovering the obtained composition.

A preferred multistage process is a "loop-gas phase"-process, such as developed by Borealis A/S, Denmark (known as BORSTAR® technology) described e.g. in patent literature, such as in EP 0887 379 or in WO92/12182.

If the polymer composition has at least a multimodal MWD, then the lower molecular weight (LMW) fraction and the higher molecular weight (HMW) fraction can be made in different steps (a) and (b), in any order.

Optionally, and preferably, the process may also comprise a prepolymerization step in a manner known in the field and which may precede the polymerisation step (a).

If desired, a further elastomeric comonomer component, so-called rubber component, may be incorporated into the obtained propylene polymer to form a heterophasic copolymer of the polymer mentioned above. The rubber component, preferably elastomeric propylene copolymer, with at least ethylene comonomer, may preferably be produced after the gas phase polymerization step (b) in a subsequent second or further gas phase polymerizations using one or more gas phase reactors.

The process is preferably a continuous process.

Preferably, in the process for producing the propylene polymer as defined above the conditions for the slurry reactor of step (a) may be as follows:

- the temperature is within the range of 40°C to 110°C, preferably between 60°C and 100°C, 70-90 °C,

- the pressure is within the range of 20 bar to 80 bar, preferably between 30 bar to 60 bar,

- hydrogen can be added for controlling the molar mass in a manner known per se.

Subsequently, the reaction mixture from the slurry (bulk) reactor (step a) is transferred to the gas phase reactor, i.e. to step (b), whereby the conditions in step (b) are preferably as follows:

- the temperature is within the range of 50°C to 130°C, preferably between 60°C and 100°C,

- the pressure is within the range of 5 bar to 50 bar, preferably between 15 bar to 35 bar,

- hydrogen can be added for controlling the molar mass in a manner known per se.

The residence time can vary in both reactor zones. In one embodiment of the process for producing the propylene polymer the residence time in slurry reactor, e.g. loop is in the range 0.5 to 5 hours, e.g. 0.5 to 2 hours and the residence time in gas phase reactor will generally be 1 to 8 hours.

If desired, the polymerization may be effected in a known manner under supercritical conditions in the slurry, preferably loop reactor, and/or as a condensed mode in the gas phase reactor.

The process of the invention or any embodiments thereof above or below enable highly feasible means for producing and further tailoring the propylene polymer composition within the invention. E.g. the properties of the polymer composition can be adjusted or controlled in a known manner e.g. with one or more of the following process parameters: temperature, hydrogen feed, comonomer feed, propylene feed e.g. in the gas phase reactor, catalyst, the type and amount of an external donor (if used), split between components, e.g. components (i) and (ii).

The above process enables very feasible means for obtaining the reactor-made propylene polymer as defined above.

In principal any catalyst can be used which provides the propylene polymer of the invention. Preferably the catalyst is a solid non-silica supported catalyst comprising at least a single site catalyst component, including a metallocene or a non-metallocene catalyst component, preferably a metallocene complex, as a catalytically active component. The catalyst may optionally comprise an activator as a cocatalyst. Preferably, the catalyst comprises a metallocene component and an activator as the cocatalyst component. Further preferable, the cocatalyst contains aluminium, i.e. is a Al-containing cocatalyst, such as aluminoxane.

In a further preferable embodiment the propylene polymer is obtainable by a solid non-silica supported catalyst polymerization, whereby the catalyst preferably contains an Al-based cocatalyst. More preferably, said solid non-silica supported catalyst is free from any boron-containing cocatalyst, more preferably free from any boron-based catalyst components. "Non-silica supported catalyst" means a support or carrier material which is other than silica or a modified silica carrier.

It is in particular preferable that the catalyst is obtainable by the emulsion solidification technology described in WO03/051934. This document is herewith included entirely to this application by reference. Hence the catalyst is preferably a non-silica supported metallocene catalyst comprising an organo-metallic compound of a transition metal of group 3 to 10 or the periodic table (IUPAC), or of an actinide or lantanide, in the form of solid catalyst particles, obtainable by a process comprising the steps of

a) preparing a solution of one or more catalyst components;

b) dispersing said solution in a solvent immiscible therewith to form an emulsion in which said one or more catalyst components are present in the droplets of the dispersed phase,

c) solidifying said dispersed phase to convert said droplets to solid particles and optionally recovering said particles to obtain said catalyst.

Preferably a solvent, more preferably an organic solvent, is used to form said solution. Still more preferably the organic solvent is selected from the group consisting of a linear alkane, cyclic alkane, linear alkene, cyclic alkene, aromatic hydrocarbon and halogen-containing hydrocarbon.

Moreover the immiscible solvent forming the continuous phase is an inert solvent, more preferably the inmiscible solvent comprises a fluorinated organic solvent and/or a functionalized derivative thereof, still more preferably the inmiscible solvent comprises a semi-, highly- or perfluorinated hydrocarbon and/or a functionalized derivative thereof. It is in particular preferred, that said immiscible solvent comprises a perfluorohydrocarbon or a functionalised derivative thereof, preferably $C_3$-$C_{30}$ perfluoroalkanes, -alkenes or -cycloalkanes, more preferred $C_4$-$C_{10}$ perfluoroalkanes, -alkenes or -cycloalkanes, particularly preferred perfluorohexane, perfluoroheptane, perfluorooctane or perfluoro (methylcyclohexane) or a mixture thereof.

Furthermore it is preferred that the emulsion comprising said continuous phase and said dispersed phase is a bi-or multiphasic system as known in the art. An emulsifier may be used for forming the emulsion. After the formation of the emulsion system, said catalyst is formed in situ from catalyst components in said solution.

In principle, the emulsifying agent may be any suitable agent which contributes to the formation and/or stabilization of the emulsion and which does not have any adverse effect on the catalytic activity of the catalyst. The emulsifying agent may e.g. be a surfactant based on hydrocarbons optionally interrupted with (a) heteroatom(s), preferably halogenated hydrocarbons optionally having a functional group, preferably semi-, highly- or perfluorinated hydrocarbons as known in the art. Alternatively, the emulsifying agent may be prepared during the emulsion preparation, e.g. by reacting a surfactant precursor with a compound of the catalyst solution. Said surfactant precursor may be a halogenated hydrocarbon with at least one functional group, e.g. a highly fluorinated $C_1$ to $C_{30}$ alcohol, which reacts e.g. with a cocatalyst component, such as aluminoxane.

In principle any solidification method can be used for forming the solid particles from the dispersed droplets. According to one preferable embodiment the solidification is effected by a temperature change treatment. Hence the emulsion subjected to gradual temperature change of up to 10 C per minute, preferably 0.5 to 6 per minute and more preferably 1 to 5 C per minute. Even more preferred the emulsion is subjected to a temperature change of more than 40 C, preferably more than 50 C within less than 10 seconds, preferably less than 6 seconds.

The recovered particles have preferably an average size range of 5 to 200 pm, more preferably 10 to 100um.

Moreover, the form of solidified particles have preferably a spherical shape, a predetermined particles size distribution and a surface area of less than 50 $m^2$/g, preferably less than 30 $m^2$/g and more preferably less than 20 $m^2$/g, wherein said particles are obtained by the process as described above.

For further details, embodiments and examples of the catalyst components, continuous and dispersed phase system, emulsion formation method, emulsifying agent and solidification methods reference is made e.g. to the above WO03/051934.

The catalytically active component of the solid non-silica supported metallocene-based catalyst is preferably of a transition metal compound of formula (I)

$$(L)_m R_n M X_q \qquad (I)$$

wherein

M is a transition metal of group 3 to 10 or the periodic table (IUPAC), or of an actinide or lantanide,

each X is independently a monovalent anionic ligand, such as $\sigma$ -ligand,

R is a bridging group linking two ligands L,

m is 1,2 or 3,

n is 0 or 1,

q is 1,2 or 3 and

m+q is equal to the valency of the metal.

Each L is independently

(a) a substituted or unsubstituted cyclopentadiene or a mono-, bi- or multifused derivative of a cyclopentadiene which optionally bear further substituents and/or one or more hetero ring atoms from a Group 13 to 16 of the Periodic Table (IUPAC).

By "$\sigma$-ligand" is meant in a known manner a group bonded to the metal at one or more places via a sigma bond.

Said organotransition metal compound (I) is a group of compounds known as metallocenes. Said metallocenes bear at least one organic ligand, generally 1, 2 or 3, e.g. 1 or 2, which is $\eta$-bonded to the metal, e.g. a $\eta^{2-6}$-ligand, such as a $\eta^5$-ligand. Preferably, a metallocene is a Group 4 to 6 transition metal, which contains at least one $\eta^5$-ligand..

Preferably the metallocene compound has a formula (II):

$$(Cp)_m R_n M X_q \qquad\qquad (II)$$

wherein M is Zr, Hf or Ti, m=1 or 2, and at least one Cp is independently a cyclopenadienyl, indenyl, tetrahydroindenyl or fluorenyl, whereby each of said Cp may be unsubstituted or substituted; the optional one or more substituent(s) may be independently selected from a group including halogen, hydrocarbyl (e.g. C1-C20-alkyl, C2-C20-alkenyl, C2-C20-alkynyl, C3-C12-cycloalkyl, C6-C20-aryl or C7-C20-arylalkyl), C3-C12-cycloalkyl which contains 1, 2, 3 or 4 heteroatom(s) in the ring moiety, C6-C20-heteroaryl, C1-C20-haloalkyl, $-SiR''_3$, $-OSiR''_3$, $-SR''$, $-PR''_2$ or $-NR''_2$, each R'' is independently a hydrogen or hydrocarbyl, e.g. C1-C20-alkyl, C2-C20-alkenyl, C2-C20-alkynyl, C3-C12-cycloalkyl or C6-C20-aryl; or e.g. in case of $-NR''_2$, the two substituents R'' can form a ring, e.g. five- or six-membered ring, together with the nitrogen atom wherein they are attached to; preferably, m is 2 and both Cp-rings are indenyl rings which each independently bear one or two substituents, preferably one substituent, at the five ring of the indenyl moiety, more preferably at 2-position (such substituent at 2-position is preferably selected from an alkyl, such as $C_1$-$C_6$ alkyl, e.g. methyl or ethyl, or trialkyloxysiloxy, wherein each alkyl is independently selected from $C_1$-$C_6$ alkyl, such as methyl or ethyl), and one or more substituents, preferably one substituent, at the six ring of the indenyl moiety, more preferably at 4-position (such substituent at the 4-position is preferably $C_6$-$C_{20}$ aromatic or heteroaromatic ring moiety, such as phenyl or naphthyl, preferably phenyl, which is optionally substituted with one or more substitutents, such as $C_1$-$C_6$ alkyl). The Cp ligands of the metallocene are preferably linked with a bridge member R, in case of indenyl, typically at 1-position. The bridge member R may contain one or more bridge atoms selected from e.g. C, Si and/or Ge, preferably from C and/or Si. One preferable bridge R is $R'_2Si=$, wherein R' is selected independently from one or more of e.g. $C_1$-$C_{10}$ alkyl, $C_1$-$C_{20}$ alkyl, such as $C_6$-$C_{12}$ aryl, or $C_7$-$C_{40}$, such as $C_7$-$C_{12}$ arylalkyl, wherein alkyl as such or as part of arylalkyl is preferably $C_1$-$C_6$ alkyl, such as ethyl or methyl, preferably methyl, and aryl is preferably phenyl. The bridge $R'_2Si=$ is preferably e.g. $C_1$-$C_6$ $alkyl_2Si=$, diphenylSi= or $C_1$-$C_6$ alkylphenylsi=, such as $Me_2Si=$.

The above described active catalyst components are commercially available or may be prepared according to the methods described in the literature. As an example of metallocenes, and the preparation methods thereof, reference is made to the above WO03/051934, as well as to EP836608, EP 576 970 and EP722 956, without limiting to these.

As mentioned above the catalyst system may further comprise an activator as a cocatalyst, as described in WO 03051934, which is enclosed hereby with reference.

Preferred as cocatalysts for metallocenes and non-metallocenes, if desired, are the aluminoxanes, in particular the C1-C10-alkylaluminoxanes, most particularly methylaluminoxane (MAO). Such aluminoxanes can be used as the sole cocatalyst or together with other cocatalyst(s). Thus besides or in addition to aluminoxanes, other cation complex forming catalysts activators can be used. Said activators are commercially available or can be prepared according to the prior art literature.

Further aluminoxane cocatalysts are described i.a. in WO-A-9428034 which is incorporated herein by reference. These are linear or cyclic oligomers of having up to 40, preferably 3 to 20, -(Al(R''')O)- repeat units (wherein R''' is hydrogen, C1-C10-alkyl (preferably methyl) or C6-C18-aryl or mixtures thereof).

The use and amounts of such activators are within the skills of an expert in the field. As an example, with the boron activators, 5:1 to 1:5, preferably 2:1 to 1:2, such as 1:1, ratio of the transition metal to boron activator may be used. In case of preferred aluminoxanes, such as methylaluminumoxane (MAO), the amount of Al, provided by aluminoxane, can be chosen to provide a molar ratio of Al:transition metal e.g. in the range of 1 to 10 000, suitably 5 to 8000, preferably 10 to 7000, e.g. 100 to 4000, such as 1000 to 3000. Typically in case of solid (heterogeneous) catalyst the ratio is preferably below 500.

The quantity of cocatalyst to be employed in the catalyst of the invention is thus variable, and depends on the conditions and the particular transition metal compound chosen in a manner well known to a person skilled in the art.

Any additional components to be contained in the solution comprising the organotransition compound may be added to said solution before or, alternatively, after the dispersing step.

**Determination Methods and Definitions**

The following definitions of terms and determination methods apply for the above general description of the invention as well as to the below examples unless otherwise defined.

**Elementary analysis**

The below described elementary analysis was used for determining the content of the elementary residues which are mainly originating from the catalyst, especially the Al-, B- and Si-residues in the polymer. Said Al-, B- and Si-residues can be in any form, e.g. in elementary or ionic form, which can be recovered and detected from the propylene polymer using e.g. the below described ICP-method. The method can also be used for determining the Ti content of the polymer. It is understood that also other known methods can be used which would result in similar results.

**ICP (Inductively coupled plasma emission)** -spectrometry

**ICP-instrument:** The instrument for determination of Al-, Si- and B-content was ICP Optima 2000 DV, PSN 620785 (supplier PerkinElmer Instruments, Belgium) with the software of the instrument.

Detection limits are 0,1 ppm (Al), 0,1 ppm (Si) and 0,1 ppm (B).

The polymer sample was first ashed in a known manner, then dissolved in an appropriate acidic solvent. The dilutions of the standards for the calibration curve are dissolved in the same solvent as the sample and the concentrations chosen so that the concentration of the sample would fall within the standard calibration curve.

ppm: means parts per million by weight.

**Ash content**: Ash content is measured according to ISO 3451-1 (1997) standard.

**Calculated ash, Al- and B-content:**

The ash and the above listed elements, Al and/or B can also be calculated from a propylene polymer based on the polymerization activity of the catalyst as exemplified in the examples. These values would give the upper limit of the presence of said residues originating from the catalyst.

Thus the estimate catalyst residues is based on catalyst composition and polymerization productivity, catalyst residues in the polymer can be estimated according to:

$$\text{Total catalyst residues [ppm]} = 1/\text{ productivity } [\text{kg}_{PP}/\text{g}_{catalyst}] * 1000$$

$$\text{Al residues [ppm]} = w_{Al, \text{ catalyst}} [\%] * \text{ total catalyst residues [ppm] } /100$$

$$\text{Zr-residues [ppm]} = w_{Zr, \text{ calatyst}} [\%] * \text{ total catalyst residues [ppm] } /100$$

(Similar calculations apply also e.g. for B, Cl and Si residues)

**Particle size distribution:** is measured via Coulter Counter LS 200 at room temperature with n-heptane as medium.

**NMR**

**NMR-spectroscopy measurements:**

The $C^{13}$NMR spectra of polypropylenes were recorded on Bruker 400MHz spectrometer at 130 °C from samples dissolved in 1,2,4-trichlorobenzene/benzene-d6 (90/10 w/w). For the pentad analysis the assignment is done according to the methods described in literature.

(T. Hayashi, Y. Inoue, R. Chüjö, and T. Asakura, Polymer 29 138-43 (1988).and Chujo R, et al,Polymer 35 339 (1994).

The NMR-measurement was used for determining the mmmm pentad concentration in a manner well known in the art.

**The volatiles content:** is measured by so called static Headspace Analysis described in the textbook: Pyrolysis and GC in Polymer Analysis, Edited by S.A. Liebman and E.J. Levy, Marcel Dekker, Inc., 1985. The gas chromatography/head-space gas chromatography (GC-HS) analysis is widely used in the automotive industry. The company Volkswagen AG has developed a standard, which is generally accepted and used in the plastic industry. It is known as "VW standard PV 3341 ". Test duration was one hour and the test temperature 160°C according to the requirements used for capacitor films.

**The molecular weights, $M_w$ and $M_n$, and molecular weight distribution MWD expressed as polydispersity $M_w/M_n$** of polymers were determined with A Millipore Waters ALC/GPC operating at 135 °C and equipped with two mixed bed and one $10^7$ Å TSK-Gel columns (TOSOHAAS 16S) and a differential refractometer detector. The solvent 1,2,4-trichlorobezene was applied at flow rate of 1 ml/min. The columns were calibrated with narrow molecular weight distribution polystyrene standards and narrow and broad polypropylenes. Reference is also made to ISO 16014.

**The xylene solubles (XS, wt%):** analysis according to the known method: 2.0 g of polymer was dissolved in 250 ml p-xylene at 135°C under agitation. After $30\pm2$ minutes the solution was allowed to cool for 15 minutes at ambient temperature and then allowed to settle for 30 minutes at $25\pm0.5$°C. The solution was filtered and evaporated in nitrogen flow and the residue dried under vacuum at 90°C until constant weight is reached.

$$XS\% = (100 \times m_1 \times v_0) / (m_0 \times v_1),$$

wherein
$m_0$ = initial polymer amount (g)
$m_1$ = weight of residue (g)
$v_0$ = initial volume (ml)
$V_1$ = volume of analyzed sample (ml)

**Melting temperature $T_m$, crystallization temperature $T_c$, and the degree of crystallinity:** measured with Mettler TA820 differential scanning calorimetry (DSC) on 5-10 mg samples. Both crystallization and melting curves were obtained during 10°C/min cooling and heating scans between 30°C and 225°C. Melting and crystallization temperatures were taken as the peaks of endotherms and exotherms.

Also the melt- and crystallization enthalpy **(Hm and Hc)** were measured by the DSC method according to ISO 11357-3.

**Chlorine residues content:** The content of Cl-residues is measured from samples in the known manner using X-ray fluorescence (XRF) spectometry. The instrument was X-ray fluorescention Philips PW2400, PSN 620487, (Supplier:

Philips, Belgium) software X47. Detection limit for Cl is 1 ppm.

**$MFR_2$:** measured according to ISO 1133 (230°C, 2.16 kg load).

**Stiffness Film TD (transversal direction), Stiffness Film MD (machine direction), Elongation at break TD and Elongation at break MD:** these were determined according to IS0527-3

**Haze and transparency:** were determined: ASTM D1003

**Experimental part**

The used raw materials and chemicals are commercially available or can be prepared according to the known methods described in the literature.

**Example 1:**

**Catalyst preparation**

The catalyst was prepared as described in example 5 of WO 03/051934, with the Al- and Zr-ratio: Al/Zr = 291 (Zr = 0,42 wt.-% and Al = 36,27).

**Catalyst characteristics:**

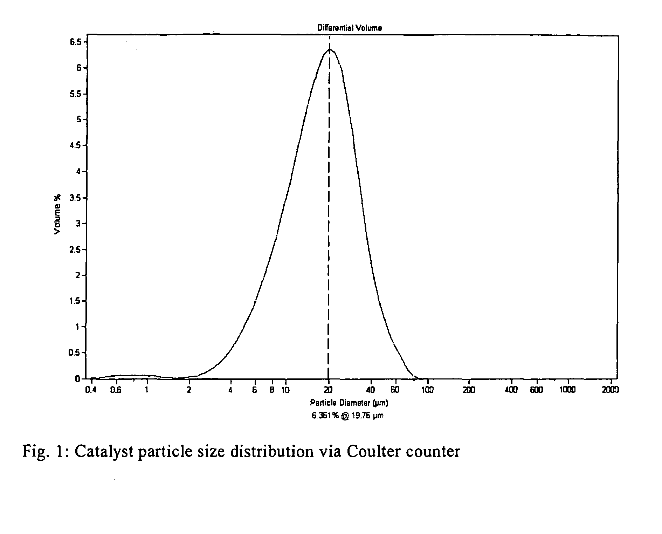

Al- and Zr- content were analyzed via above mentioned method to 36,27 wt.-% Al and 0,42 %-wt. Zr. The average particle diameter (analyzed via Coulter counter) is 20 $\mu$m and particle size distribution is shown in Fig. 1

**Polymerization:**

A 5 liter stainless steel reactor was used for propylene polymerizations. 1100 g of liquid propylene (Borealis polymerization grade) was fed to reactor. 0.1 ml triethylaluminum (100%, purchased from Crompton) was fed as a scavenger and 15 mmol hydrogen (quality 6.0, supplied by Åga) as chain transfer agent. Reactor temperature was set to 30 °C. 21,4 mg catalyst were flushed into to the reactor with nitrogen overpressure. The reactor was heated up to 70 °C in a period of about 14 minutes. Polymerization was continued for 50 minutes at 70 °C, then propylene was flushed out, 5 mmol hydrogen were fed and the reactor pressure was increased to 20 bars by feeding (gaseous-) propylene. Polymerization continued in gas-phase for 210 minutes, then the reactor was flashed, the polymer was dried and weighted.

Polymer yield was weighted to 790 g, that equals a productivity of 36,9 $kg_{PP}/g_{catalyst}$.

**Ash content:** Ash content was analyzed to 68 ppm

**Estimate residues:**

Total catalyst residues estimated to 27 ppm
Al residues estimated to 9,8 ppm
Zr residues estimated to 0,1 ppm

**Example 2:**

The catalyst was prepared as in Example 1 (Al/Zr = 291)

**Polymerization**

A 5 liter stainless steel reactor was used for propylene polymerizations. 1100 g of liquid propylene (Borealis polymerization grade) was fed to reactor. 0.1 ml triethylaluminum (100%, purchased from Crompton) was fed as a scavenger and 15 mmol hydrogen (quality 6.0, supplied by Åga) as chain transfer agent. Reactor temperature was set to 30 °C. 30,6 mg catalyst was flushed into to the reactor with nitrogen overpressure. The reactor was heated up to 70 °C in a period of about 14 minutes. Polymerization was continued for 40 minutes at 70 °C, then propylene was flushed out, 5 mmol hydrogen were fed and the reactor pressure was increased to 20 bars by feeding (gaseous) propylene. Polymerization continued in gas-phase for 181 minutes, then the reactor was flashed, the polymer was dried and weighted.
Polymer yield was weighted to 890 g, equalling a productivity of 29 $kg_{PP}/g_{catalyst}$.
**Ash content:** Ash content was analyzed to 47 ppm

**Estimate residues:**

Total catalyst residues estimated to 34 ppm
Al residues estimated to 12 ppm
Zr residues estimated to 0,1 ppm

**Example 3:**

The same catalyst as in Example 1 was used in this example (Al/Zr= 291)

**Polymerization**

A 5 liter stainless steel reactor was used for propylene polymerizations. 1100 g of liquid propylene (Borealis polymerization grade) was fed to reactor. 0.1 ml triethylaluminum (100%, purchased from Crompton) was fed as a scavenger and 20 mmol hydrogen (quality 6.0, supplied by Åga) as chain transfer agent. Reactor temperature was set to 30 °C. 29,4 mg catalyst was flushed into to the reactor with nitrogen overpressure. The reactor was heated up to 70 °C in a period of about 14 minutes. Polymerization was continued for 55 minutes at 70 °C, then propylene was flushed out, 10 mmol hydrogen were fed and the reactor pressure was increased to 20 bars by feeding (gaseous) propylene. Polymerization continued in gas-phase for 189 minutes, then the reactor was flashed, the polymer was dried and weighted.
Polymer yield was weighted to 815 g, equalling a productivity of 27,7 $kg_{PP}/g_{catalyst}$.

**Estimate residues:**

Total catalyst residues estimated to 36 ppm
Al residues estimated to 13 ppm
Zr residues estimated to 0,2 ppm

**Example 4:**

**Catalyst preparation**

The catalyst was prepared as described in example 1, but using the ratio: Al/Zr = 271 (Al = 34,50 wt.-% and Zr = 0,43 wt.-%).

**Polymerization:**

A 5 liter stainless steel reactor was used for propylene polymerizations. 1100 g of liquid propylene (Borealis polymerization grade) was fed to reactor. 0.2 ml triethylaluminum (100%, purchased from Crompton) was fed as a scavenger and 15 mmol hydrogen (quality 6.0, supplied by Åga) as chain transfer agent. Reactor temperature was set to 30 °C. 29.1 mg catalyst were flushed into to the reactor with nitrogen overpressure. The reactor was heated up to 70 °C in a period of about 14 minutes. Polymerization was continued for 50 minutes at 70 °C, then propylene was flushed out, 5 mmol hydrogen were fed and the reactor pressure was increased to 20 bars by feeding (gaseous-) propylene. Polymerization continued in gas-phase for 144 minutes, then the reactor was flashed, the polymer was dried and weighted.

Polymer yield was weighted to 901 g, that equals a productivity of 31 $kg_{PP}/g_{catalyst}$.

**Estimate residues:**

Total catalyst residues estimated to 32 ppm

Al residues estimated to 11 ppm

Zr residues estimated to 0,1 ppm

The experimental data of the propylene polymers of examples 1 to 4 are listed in table 1 below. The data show the advantageous properties of the present propylene polymer already when obtained directly from the polymerization process without any treatment steps for removing any of the catalysts. Also the advantageous mechanical properties properties of the polymers of the invention are apparent from the below table.

Table 1: Experimental data of examples 1-4

| Example no. | | Ex. 1 | Ex. 2 | Ex. 3 | Ex. 4 |
|---|---|---|---|---|---|
| Productivity | $kg_{PP}/g_{cat}$ | 36,9 | 29 | 27,7 | 31 |
| Catalyst residue (Calculated) | ppm | 27 | 34 | 36 | 32 |
| B | ppm | n.d. | n.d. | n.d. | n.d. |
| Al | ppm | 9,8 | 12 | 13 | 11 |
| Si | ppm | n.d. | n.d. | n.d. | n.d. |
| Zr | ppm | 0,1 | 0,1 | 0,2 | 0,1 |
| Cl | ppm | n.d. | n.d. | n.d. | n.d. |
| MFR | g/10' | 1,79 | 1,78 | 3,9 | 2 |
| Mw | g/mol | 467000 | 499000 | 400000 | 453000 |
| Mw/Mn | - | 2,7 | 2,7 | 3 | 2,8 |
| XS | wt% | 0,51 | 0,56 | 0,4 | 0,85 |
| mmmm | - | 0,95 | 0,96 | 0,96 | 0,96 |
| Stiffness Film TD | MPa | 1008 | 964 | 1019 | 1011 |
| Stiffness Film MD | MPa | 1013 | 1028 | 1094 | 1059 |
| Elongation at Break TD | % | 718 | 613 | 780 | 700 |
| Elongation at Break MD | % | 660 | 608 | 702 | 691 |
| Tm | °C | 149,8 | 150,2 | 152 | 150,6 |
| Hm | J/g | 97,4 | 95,1 | 97,7 | 99,5 |
| Tc | °C | 106,4 | 106,5 | 113,3 | 111,9 |
| Hc | J/g | 88,6 | 88,7 | 94,8 | 74,6 |
| Transparency | % | | | | 94 |
| Haze | % | | | | 7,8 |
| Volatiles | ppm | | 200 | | |

**Claims**

1. A propylene polymer having an aluminum residue content of less than 25 ppm and a boron residue content less than 25 ppm, wherein the volatiles content determined by GC-HS for one hour at 160°C is less than 400 ppm, wherein the propylene polymer is obtainable by a solid non-silica supported metallocene-based catalyst.

2. The propylene polymer according to claim 1 wherein the propylene polymer is a high crystalline propylene polymer.

3. The propylene polymer according to claim 1 or 2, wherein the propylene polymer has an isotacticity of higher than 0.940 mmmm pentad concentration determined by NMR-spectroscopy.

4. The propylene polymer according to anyone of the preceding claims wherein the aluminum residue content is less than 10 ppm.

5. The propylene polymer according to anyone of the preceding claims wherein the boron residue content is less than 10 ppm.

6. The propylene polymer according to anyone of the preceding claims wherein the ash content is less than 50 ppm.

7. The propylene polymer according to anyone of the preceding claims wherein the silicon residue content is less than 10 ppm.

8. The propylene polymer according to anyone of the preceding claims wherein the total amount of aluminum, boron and silicon residues is less than 10 ppm.

9. The propylene polymer according to anyone of the preceding claims wherein the chlorine residue content in the propylene polymer is less than 10 ppm, more preferably less than 5 ppm.

10. The propylene polymer according to anyone of the preceding claims wherein the propylene polymer is a reactor-made propylene polymer.

11. The propylene polymer according to anyone of the preceding claims wherein the propylene polymer is a propylene homopolymer.

12. The propylene polymer according to anyone of the preceding claims wherein the propylene polymer has xylene solubles (XS) of less than 2.0 wt.-%.

13. The propylene polymer according to anyone of the preceding claims wherein the propylene polymer has an Mw/Mn of not higher than 20.0.

14. The propylene polymer according to anyone of the preceding claims wherein the propylene polymer has an MFR2 of up to 10 g/10min.

15. The propylene polymer according to anyone of the preceding claims wherein the propylene polymer is obtainable by said solid, non-silica supported metallocene-based catalyst in the absence of a boron-containing activator as a co-catalyst.

16. The propylene polymer according to anyone of the preceding claims wherein the propylene polymer is obtainable by said solid, non-silica supported metallocene-based catalyst in the presence of an Al-containing activator as a co-catalyst.

17. The propylene polymer according to anyone of the preceding claims wherein said solid non-silica supported metallocene-based catalyst:

(1) comprises at least a metallocene complex as a catalytically active component, optionally together with an activator as the cocatalyst, and
(2) has a productivity of at least 30 kg PP/g catalyst.

18. The propylene polymer as defined in any of the preceding claims comprising at least two propylene homo- or copolymer components (i) and (ii) wherein one of the components (i) and (ii) is a LMW component with higher MFR and the other of components (i) and (ii) is a HMW component with lower MFR.

19. A process for producing a propylene polymer according to anyone of the preceding claims 1 to 18 comprising the step of polymerising propylene in the presence of a solid non-silica supported metallocene-based catalyst, wherein the catalyst comprises an organo-metallic compound of a transition metal of group 3 to 10 of the periodic table (IUPAC), or of an actinide or lantanide, in the form of solid catalyst particles, obtainable by a process comprising the steps of

   a) preparing a solution of one or more catalyst components;
   b) dispersing said solution in a solvent immiscible therewith to form an emulsion in which one or more catalyst components are present in the droplets of the dispersed phase,
   c) solidifying said dispersed phase to convert said droplets to solid particles and optionally recovering said particles to obtain said catalyst.

20. The process according to claim 19, wherein the catalyst comprises a catalyst component of a transition metal compound of formula (I)

$$(L)_m R_n M X_q \qquad (I)$$

wherein

   M is a transition metal as defined in claim 18, and
   each X is independently a $\sigma$-ligand,
   each L is independently an organic ligand which coordinates to M,
   R is a bridging group linking two ligands L,
   m is 1,2 or 3,
   n is 0 or 1,
   q is 1,2 or 3 and
   m+q is equal to the valency of the metal.

21. The process according to claim 19 or 20, wherein the catalyst further comprises an aluminum based cocatalyst, preferably aluminoxane cocatalyst.

22. The process according to anyone of the preceding claims 19 to 21, wherein the immiscible solvent comprises a perfluorohydrocarbon or a functionalized derivative thereof, preferably C3 to C30 perfluoralkane, -alkenes or cycloalkanes.

23. The process according to anyone of the preceding claims 19 to 22, wherein (b) the emulsion system is formed optionally by using an emulsifying agent and (c) said catalyst is formed in situ from catalyst components in said solution.

24. The process according to anyone of the preceding claims 19 to 23, wherein the solidification is effected by a temperature change treatment.

25. The process according to anyone of claims 19 to 24, wherein the catalyst comprises a metallocene catalyst component of formula (I)

$$(L)_m R_n M X_q \qquad (I)$$

wherein

   M is a Zr, Hf or Ti, and
   each X is independently a $\sigma$-ligand,
   each L is independently an organic ligand containing a substituted or unsubstituted cyclopentadienyl ligand which is bonded to M via a $\pi$-bond, preferably a cyclopentadienyl, indenyl, tetrahydroindenyl or fluorenyl, whereby each of said L may be unsubstituted or substituted with one or more substituents;

R is a bridging group linking two ligands L,
m is 1,2 or 3,
n is 0 or 1,
q is 1,2 or 3 and
m+q is equal to the valency of the metal.

26. The process according to anyone of the preceding claims 19 to 25, wherein the process is a multi-stage process comprising the steps of

a) polymerizing propylene monomers, optionally together with one or more comonomers, in the presence of the catalyst obtainable as claimed in anyone of the preceding claims 19 to 25 to produce a first propylene polymer component,
b) transferring the reaction product of step a) to a subsequent gas phase reactor,
c) polymerizing propylene monomers optionally in the presence of one or more comonomers, in the presence of the reaction product of step a) to produce a second propylene polymer component for obtaining the propylene polymer as defined in anyone of the preceding claims 1 to 18 and recovering the obtained product.

27. A propylene polymer obtainable by the process as defined in any of the preceding claims 19 to 26.

28. A method for reducing the aluminum and boron content of an $\alpha$-olefin polymer obtainable by polymerization of alpha-olefin monomers, optionally together with one or more comonomers, in the presence of a solid non-silica supported metallocene-based catalyst, wherein said polymer is produced using a process as defined in anyone of claims 19 to 26.

29. Use of a the propylene polymer according to anyone of the claims 1 to 18 or claim 27 for films, fibers and molded articles.

30. Use of the propylene polymer according to anyone of the preceding claims 1 to 18 or claim 27 for food packaging or medical packaging articles.

31. An article comprising the propylene polymer according to anyone of the preceding claims 1 to 18 or claim 27.

32. The article according to claim 31, wherein the article is a film, fiber or molded article.

33. The article according to claim 31, wherein the article is a food packaging or medical packaging article.

34. Layered structure, preferably a film, comprising one or more layers of which at least one layer comprises the propylene polymer of anyone of the preceding claims 1 to 18 or claim 27.

35. The film according to claim 32 or 34, comprising at least one layer which consists essentially of the propylene polymer as defined in anyone of claims 1 to 18 or claim 27.

36. The film according to claim 32, 34 or 35, which is a capacitor film.

37. A biaxially oriented polypropylene film comprising a propylene polymer according to anyone of the preceding claims 1 to 18 or claim 27.

**Patentansprüche**

1. Propylenpolymer mit einem restlichen Aluminiumgehalt von weniger als 25 ppm und einem restlichen Borgehalt von weniger als 25 ppm, wobei der Gehalt an flüchtigen Bestandteilen, der durch GC-HS für 1 h bei 160°C bestimmt worden ist, weniger als 400 ppm beträgt und wobei das Propylenpolymer durch einen festen, getragenen, auf Metallocen basierenden Katalysator, der von Siliciumdioxid verschieden ist, erhalten werden kann.

2. Propylenpolymer nach Anspruch 1, wobei das Propylenpolymer ein stark kristallines Propylenpolymer ist.

3. Propylenpolymer nach Anspruch 1 oder 2, wobei das Propylenpolymer eine Isotaktizität von mehr als 0,940 mmmm Pentad-Konzentration aufweist, und zwar durch NMR-Spektroskopie bestimmt.

4. Propylenpolymer nach einem der vorstehenden Ansprüche, wobei der restliche Aluminiumgehalt weniger als 10 ppm beträgt.

5. Propylenpolymer nach einem der vorstehenden Ansprüche, wobei der restliche Borgehalt weniger als 10 ppm beträgt.

6. Propylenpolymer nach einem der vorstehenden Ansprüche, wobei der Aschegehalt weniger als 50 ppm beträgt.

7. Propylenpolymer nach einem der vorstehenden Ansprüche, wobei der restliche Siliciumgehalt weniger als 10 ppm beträgt.

8. Propylenpolymer nach einem der vorstehenden Ansprüche, wobei die Gesamtmenge der Aluminium-, Bor- und Siliciumrückstände weniger als 10 ppm beträgt.

9. Propylenpolymer nach einem der vorstehenden Ansprüche, wobei der restliche Chlorgehalt im Propylenpolymer weniger als 10 ppm, stärker bevorzugt weniger als 5 ppm beträgt.

10. Propylenpolymer nach einem der vorstehenden Ansprüche, wobei das Propylenpolymer ein in einem Reaktor erzeugtes Propylenpolymer ist.

11. Propylenpolymer nach einem der vorstehenden Ansprüche, wobei das Propylenpolymer ein Propylenhomopolymer ist.

12. Propylenpolymer nach einem der vorstehenden Ansprüche, wobei das Propylenpolymer in Xylol lösliche Bestandteile (XS) von weniger als 2,0 Gew.-% aufweist.

13. Propylenpolymer nach einem der vorstehenden Ansprüche, wobei das Propylenpolymer ein Mw/Mn von nicht mehr als 20,0 aufweist.

14. Propylenpolymer nach einem der vorstehenden Ansprüche, wobei das Propylenpolymer einen $MFR_2$-Wert von bis zu 10 g/10 min aufweist.

15. Propylenpolymer nach einem der vorstehenden Ansprüche, wobei das Propylenpolymer durch den festen, getragenen, auf Metallocen basierenden Katalysator, der von Siliciumdioxid verschieden ist, ohne einen borhaltigen Aktivator als Cokatalysator erhalten werden kann.

16. Propylenpolymer nach einem der vorstehenden Ansprüche, wobei das Propylenpolymer durch den festen, getragenen, auf Metallocen basierenden Katalysator, der von Siliciumdioxid verschieden ist, in Gegenwart eines A1 enthaltenden Aktivators als Cokatalysator erhalten werden kann.

17. Propylenpolymer nach einem der vorstehenden Ansprüche, wobei der feste, getragene, auf Metallocen basierende Katalysator, der von Siliciumdioxid verschieden ist:

   (1) zumindest einen Metallocenkomplex als katalytisch wirksame Komponente, gegebenenfalls zusammen mit einem Aktivator als Cokatalysator, aufweist und
   (2) eine Produktivität von mindestens 30 kg PP/g Katalysator aufweist.

18. Propylenpolymer nach einem der vorstehenden Ansprüche, das mindestens zwei Propylenhomo- oder -copolymer-Komponenten (i) und (ii) aufweist, wobei eine der Komponenten (i) und (ii) eine LMW-Komponente mit einer höheren MFR ist und die andere der Komponenten (i) und (ii) eine HMW-Komponente mit einer niedrigeren MFR ist.

19. Verfahren zum Herstellen eines Propylenpolymers nach einem der vorstehenden Ansprüche 1 bis 18, das einen Schritt des Polymerisierens von Propylen in Gegenwart eines festen, getragenen, auf Metallocen basierenden Katalysators, der von Siliciumdioxid verschieden ist, aufweist, wobei der Katalysator eine Organometallverbindung eines Übergangsmetalls der Gruppen 3 bis 10 des Periodensystems (IUPAC) oder eines Actiniden oder Lathanoiden in Form fester Katalysatorpartikel aufweist, die nach einem Verfahren erhalten werden können, das die folgenden Schritte aufweist:

a) Herstellen einer Lösung von einer oder mehreren Katalysatorkomponenten;
b) Dispergieren der Lösung in einem damit nicht mischbaren Lösungsmittel, um eine Emulsion zu erzeugen, in der eine oder mehrere Katalysatorkomponenten in den Tropfen der dispergierten Phase vorliegen;
c) Festwerdenlassen der dispergierten Phase, um die Tropfen in feste Partikel zu überführen, und gegebenenfalls Gewinnen der Partikel, um den Katalysator zu erhalten.

20. Verfahren nach Anspruch 19, wobei der Katalysator eine Katalysatorkomponente einer Übergangsmetallverbindung der Formel (I) aufweist:

$$(L)_m R_n MX_q \qquad (I)$$

worin

M ein Übergangsmetall nach Anspruch 18 ist und
X jeweils unabhängig voneinander ein $\sigma$-Ligand ist,
L jeweils unabhängig ein organischer Ligand ist, der sich koordinativ an M anlagert,
R ein Brückenrest ist, der zwei Liganden L verbindet,
m gleich 1, 2 oder 3 ist,
n gleich 0 oder 1 ist,
q gleich 1, 2 oder 3 ist und
m + q gleich der Wertigkeit des Metalls ist.

21. Verfahren nach Anspruch 19 oder 20, wobei der Katalysator ferner einen auf Aluminium basierenden Cokatalysator, vorzugsweise einen Aluminoxan-Cokatalysator, aufweist.

22. Verfahren nach einem der vorstehenden Ansprüche 19 bis 21, wobei das nicht mischbare Lösungsmittel einen Perfluorkohlenwasserstoff oder ein funktionalisiertes Derivat davon, vorzugsweise $C_3$-$C_{30}$-Perfluoralkan, -Alkane oder Cycloalkane aufweist.

23. Verfahren nach einem der vorstehenden Ansprüche 19 bis 22, wobei (b) das Emulsionssystem gegebenenfalls erzeugt wird, indem ein Emulgator verwendet wird, und (c) der Katalysator in situ aus den Katalysatorkomponenten in der Lösung erzeugt wird.

24. Verfahren nach einem der vorstehenden Ansprüche 19 bis 23, wobei das Festwerdenlassen durch eine Temperaturänderungsbehandlung erfolgt.

25. Verfahren nach einem der Ansprüche 19 bis 24, wobei der Katalysator eine Metallocenkatalysatorkomponente mit der Formel (I) umfaßt:

$$(L)_m R_n MX_q \qquad (I)$$

worin

M gleich Zr, Hf oder Ti ist und
X jeweils unabhängig voneinander ein $\sigma$-Ligand ist,
L jeweils unabhängig voneinander ein organischer Ligand ist, der einen substituierten oder unsubstituierten Cyclopentadienyl-Liganden, der über eine $\pi$-Bindung an M gebunden ist, vorzugsweise ein Cyclpentadienyl, Indenyl,Tetrahydroindenyl oder Fluorenyl, enthält, wobei jedes dieser L unsubstituiert oder mit einem oder mehreren Substituenten substituiert sein kann;
R ein Brückenrest ist, der zwei Liganden L verbindet,
m gleich 1, 2 oder 3 ist,
n gleich 0 oder 1 ist,
q gleich 1, 2 oder 3 ist und
m + q gleich der Wertigkeit des Metalls ist.

26. Verfahren nach einem der vorstehenden Ansprüche 19 bis 25, wobei das Verfahren ein mehrstufiger Prozeß ist, der die folgenden Schritte aufweist:

a) Polymerisieren von Propylenmonomeren, gegebenenfalls zusammen mit einem oder mehreren Comonomeren, in Gegenwart des Katalysators, der gemäß einem der vorstehenden Ansprüche 19 bis 25 erhalten werden kann, um eine erste Propylenpolymerkomponente zu erzeugen,
b) Überführen des Reaktionsproduktes vom Schritt a) in einen nachfolgenden Gasphasenreaktor,
c) Polymerisieren von Propylenmonomeren, gegebenenfalls in Gegenwart von einem oder mehreren Comonomeren, in Gegenwart des Reaktionsproduktes vom Schritt a), wodurch eine zweite Propylenpolymerkomponente erzeugt wird, um das Propylenpolymer nach einem der vorstehenden Ansprüche 1 bis 18 zu erhalten, und Gewinnen des erhaltenen Produktes.

27. Propylenpolymer, das nach dem Verfahren nach einem der vorstehenden Ansprüche 19 bis 26 erhalten werden kann.

28. Verfahren zur Verringerung des Aluminium- und Borgehalts eines $\alpha$-Olefin-Polymers, das durch Polymerisieren von $\alpha$-OlefinMonomeren, gegebenenfalls zusammen mit einem oder mehreren Comonomeren, in Gegenwart eines festen, getragenen, auf Metallocen basierenden Katalysators, der von Siliciumdioxid verschieden ist, erhalten werden kann, wobei das Polymer unter Anwendung eines Verfahrens nach einem der Ansprüche 19 bis 26 erzeugt wird.

29. Verwendung eines Propylenpolymers nach einem der Ansprüche 1 bis 18 oder nach Anspruch 27 für Folien, Fasern und Formgegenstände.

30. Verwendung des Propylenpolymers nach einem der vorstehenden Ansprüche 1 bis 18 oder nach Anspruch 27 für Gegenstände für Lebensmittelverpackungen oder medizinische Verpackungen.

31. Gegenstand, der das Propylenpolymer nach einem der vorstehenden Ansprüche 1 bis 18 oder Anspruch 27 aufweist.

32. Gegenstand nach Anspruch 31, wobei der Gegenstand eine Folie, Faser oder ein Formgegenstand ist.

33. Gegenstand nach Anspruch 31, wobei der Gegenstand ein Gegenstand für Lebensmittelverpackungen oder medizinische Verpackungen ist.

34. Schichtstruktur, vorzugsweise eine Folie, die eine oder mehrere Schichten aufweist, von denen zumindest eine Schicht das Polypropylenpolymer nach einem der vorstehenden Ansprüche 1 bis 18 oder nach Anspruch 27 aufweist.

35. Folie nach Anspruch 32 oder 34, die zumindest eine Schicht aufweist, die im wesentlichen aus dem Propylenpolymer nach einem der Ansprüche 1 bis 18 oder nach Anspruch 27 besteht.

36. Folie nach Anspruch 32, 34 oder 35, die eine Kondensatorfolie ist.

37. Biaxial orientierte Polypropylenfolie, die ein Propylenpolymer nach einem der vorstehenden Ansprüche 1 bis 18 oder nach Anspruch 27 aufweist.

**Revendications**

1. Polymère de propylène ayant une teneur résiduelle en aluminium inférieure à 25 ppm et une teneur résiduelle en bore inférieure à 25 ppm, où la teneur en volatils déterminée par GC-HS pendant une heure à 160 °C est inférieure à 400 ppm, le polymère de propylène pouvant être obtenu à l'aide d'un catalyseur à base de métallocène sur support sans silice solide.

2. Polymère de propylène selon la revendication 1, le polymère de propylène étant un polymère de propylène à cristallinité élevée.

3. Polymère de propylène selon la revendication 1 ou 2, le polymère de propylène ayant un isotacticité supérieure à 0,940 mmmm de concentration de pentade déterminée par spectroscopie RMN.

4. Polymère de propylène selon l'une quelconque des revendications précédentes, dans lequel la teneur résiduelle en aluminium est inférieure à 10 ppm.

**5.** Polymère de propylène selon l'une quelconque des revendications précédentes, dans lequel la teneur résiduelle en bore est inférieure à 10 ppm.

**6.** Polymère de propylène selon l'une quelconque des revendications précédentes, dans lequel la teneur en cendres est inférieure à 50 ppm.

**7.** Polymère de propylène selon l'une quelconque des revendications précédentes, dans lequel la teneur résiduelle en silicium est inférieure à 10 ppm.

**8.** Polymère de propylène selon l'une quelconque des revendications précédentes, dans lequel la quantité résiduelle totale d'aluminium, de bore et de silicium est inférieure à 10 ppm.

**9.** Polymère de propylène selon l'une quelconque des revendications précédentes, dans lequel la teneur résiduelle en chlore dans le polymère de propylène est inférieure à 10 ppm, plus préférablement inférieure à 5 ppm.

**10.** Polymère de propylène selon l'une quelconque des revendications précédentes, le polymère de propylène étant un polymère de propylène fabriqué dans un réacteur.

**11.** Polymère de propylène selon l'une quelconque des revendications précédentes, le polymère de propylène étant un homopolymère de propylène.

**12.** Polymère de propylène selon l'une quelconque des revendications précédentes, le polymère de propylène ayant une teneur en matières solubles dans le xylène (XS) inférieure à 2,0 % en poids.

**13.** Polymère de propylène selon l'une quelconque des revendications précédentes, le polymère de propylène ayant un Mw/Mn n'excédant pas 20,0.

**14.** Polymère de propylène selon l'une quelconque des revendications précédentes, le polymère de propylène ayant un MFR2 pouvant aller jusqu'à 10 g/10 min.

**15.** Polymère de propylène selon l'une quelconque des revendications précédentes, le polymère de propylène pouvant être obtenu à l'aide dudit catalyseur à base de métallocène sur support sans silice solide, en l'absence d'un activateur contenant du bore en tant que cocatalyseur.

**16.** Polymère de propylène selon l'une quelconque des revendications précédentes, le polymère de propylène pouvant être obtenu à l'aide dudit catalyseur à base de métallocène sur support sans silice solide, en présence d'un activateur contenant A1 en tant que cocatalyseur.

**17.** Polymère de propylène selon l'une quelconque des revendications précédentes, ledit catalyseur à base de métallocène sur support sans silice solide :

(1) comprenant au moins un complexe de métallocène en tant que composant catalytiquement actif, éventuellement conjointement avec un activateur en tant que cocatalyseur, et
(2) ayant une productivité d'au moins 30 kg PP/g de catalyseur.

**18.** Polymère de propylène tel que défini dans l'une quelconque des revendications précédentes, comprenant au moins deux composants d'homo- ou copolymère de propylène (i) et (ii), un des composants (i) et (ii) étant un composant de faible poids moléculaire (LMW) ayant un indice de fluidité (MFR) plus élevé et l'autre des composants (i) et (ii) est un composant de poids moléculaire élevé (HMW) ayant un MFR plus faible.

**19.** Procédé de production d'un polymère de propylène selon l'une quelconque des revendications précédentes 1 à 18, comprenant l'étape de polymérisation de propylène en présence d'un catalyseur à base de métallocène sur support sans silice solide, le catalyseur comprenant un composé organométallique d'un métal de transition du groupe 3 à 10 du tableau périodique (IUPAC), ou un actinide ou lanthanide, sous la forme de particules de catalyseur solides, pouvant être obtenues par un procédé comprenant les étapes de

a) préparation d'une solution d'un ou plusieurs composants de catalyseur ;
b) dispersion de ladite solution dans un solvant immiscible avec celle-ci pour former une émulsion dans laquelle un ou plusieurs composants de catalyseur sont présents dans les gouttelettes de la phase dispersée,
c) solidification de ladite phase dispersée pour convertir lesdites gouttelettes en particules solides et éventuellement, récupération desdites particules pour obtenir ledit catalyseur.

**20.** Procédé selon la revendication 19, dans lequel le catalyseur comprend un composant de catalyseur d'un composé de métal de transition de formule (I)

$$(L)_m R_n M X_q \qquad (I)$$

où

M est un métal de transition tel que défini dans la revendication 18, et
chaque X est indépendamment un ligand $\sigma$,
chaque L est indépendamment un ligand organique qui est coordonné avec M,
R est un groupe de pontage reliant deux ligands L,
m est 1, 2 ou 3,
n est 0 ou 1,
q est 1, 2 ou 3 et
m + q est égal à la valence du métal.

**21.** Procédé selon la revendication 19 ou 20, dans lequel le catalyseur comprend en outre un cocatalyseur à base d'aluminium, de préférence un cocatalyseur d'aluminoxane.

**22.** Procédé selon l'une quelconque des revendications précédentes 19 à 21, dans lequel le solvant immiscible comprend un perfluorohydrocarbone ou un dérivé fonctionnalisé de celui-ci, de préférence des perfluoralcane, -alcènes ou cycloalcanes en C3 à C30.

**23.** Procédé selon l'une quelconque des revendications précédentes 19 à 22, dans lequel (b) le système d'émulsion est formé facultativement en utilisant un agent émulsifiant et (c) ledit catalyseur est formé *in situ* à partir de composants de catalyseur dans ladite solution.

**24.** Procédé selon l'une quelconque des revendications précédentes 19 à 23, dans lequel la solidification est effectuée par un traitement par changement de température.

**25.** Procédé selon l'une quelconque des revendications 19 à 24, dans lequel le catalyseur comprend un composant de catalyseur métallocène de formule (I)

$$(L)_m R_n M X_q \qquad (I)$$

où

M est Zr, Hf ou Ti, et
chaque X est indépendamment un ligand $\sigma$,
chaque L est indépendamment un ligand organique contenant un ligand cyclopentadiényle substitué ou non substitué qui est lié à M via une liaison $\pi$, de préférence un cyclopentadiényle, un indényle, un tétrahydroindényle ou un fluorényle, de telle manière que chacun desdits L puisse être non substitué ou substitué par un ou plusieurs substituants ;
R est un groupe de pontage reliant deux ligands L,
m est 1, 2 ou 3,
n est 0 ou 1,
q est 1, 2 ou 3 et
m + q est égal à la valence du métal.

**26.** Procédé selon l'une quelconque des revendications précédentes 19 à 25, le procédé étant un procédé à étapes multiples comprenant les étapes de

a) polymérisation de monomères de propylène, éventuellement conjointement avec un ou plusieurs comonomères, en présence du catalyseur pouvant être obtenu selon l'une quelconque des revendications précédentes 19 à 25, pour produire un premier composant de polymère de propylène,

b) transfert du produit de réaction de l'étape a) dans un réacteur en phase gazeuse consécutif,

c) polymérisation de monomères de propylène éventuellement en présence d'un ou plusieurs comonomères, en présence du produit de réaction de l'étape a) pour produire un deuxième composant de polymère de propylène afin d'obtenir le polymère de propylène tel que défini dans l'une quelconque des revendications précédentes 1 à 18, et récupération du produit obtenu.

27. Polymère de propylène pouvant être obtenu par un procédé tel que défini dans l'une quelconque des revendications précédentes 19 à 26.

28. Procédé de réduction de la teneur en aluminium et en bore d'un polymère d'$\alpha$-oléfine pouvant être obtenu par polymérisation de monomères d'alpha-oléfine, éventuellement conjointement avec un ou plusieurs comonomères, en présence d'un catalyseur à base de métallocène sur support sans silice solide, ledit polymère étant produit en utilisant un procédé tel que défini dans l'une quelconque des revendications 19 à 26.

29. Utilisation du polymère de propylène selon l'une quelconque des revendications 1 à 18 ou la revendication 27, pour des films, des fibres et des articles moulés.

30. Utilisation du polymère de propylène selon l'une quelconque des revendications précédentes 1 à 18 ou la revendication 27, pour des articles d'emballage alimentaire ou d'emballage médical.

31. Article comprenant le polymère de propylène selon l'une quelconque des revendications précédentes 1 à 18 ou la revendication 27.

32. Article selon la revendication 31, l'article étant un film, une fibre ou un article moulé.

33. Article selon la revendication 31, l'article étant un article d'emballage alimentaire ou d'emballage médical.

34. Structure stratifiée, de préférence un film, comprenant une ou plusieurs couches dont au moins une couche comprend le polymère de propylène de l'une quelconque des revendications précédentes 1 à 18 ou la revendication 27.

35. Film selon la revendication 32 ou 34, comprenant au moins une couche qui est essentiellement constituée du polymère de propylène tel que défini dans l'une quelconque des revendications 1 à 18 ou la revendication 27.

36. Film selon la revendication 32, 34 ou 35, qui est un film de condensateur.

37. Film de polypropylène à orientation biaxiale comprenant un polymère de propylène selon l'une quelconque des revendications précédentes 1 à 18 ou la revendication 27.

Fig. 1: Catalyst particle size distribution via Coulter counter

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0216455 A
- EP 0887379 A
- WO 9212182 A
- WO 03051934 A
- EP 836608 A
- EP 576970 A
- EP 722956 A
- WO 9428034 A

**Non-patent literature cited in the description**

- **T. HAYASHI ; Y. INOUE ; R. CHÜJÖ ; T. ASAKURA.** *Polymer,* 1988, vol. 29, 138-43
- **CHUJO R et al.** *Polymer,* 1994, vol. 35, 339
- Pyrolysis and GC in Polymer Analysis. Marcel Dekker, Inc, 1985